# EUROPEAN PATENT SPECIFICATION

(11) **EP 4 178 027 B1**
(45) Date of publication and mention of the grant of the patent: **09.09.2026**
(21) Application number: 21915682.5
(22) Date of filing: 23.12.2021
(51) Int. Cl.: H01M 50/178, H01M 50/184, H01M 50/131, H01M 50/534, H01M 50/562, H01M 50/586, H01M 50/59, H01M 50/55, H01M 50/193

(54) **ELECTRODE LEAD FOR SECONDARY BATTERY HAVING GAS RELEASE PORTION AND SECONDARY BATTERY INCLUDING THE SAME**
ELEKTRODENLEITUNG FÜR SEKUNDÄRBATTERIE MIT GASFREIGABETEIL UND SEKUNDÄRBATTERIE MIT DEMSELBEN
FIL D'ÉLECTRODE POUR BATTERIE SECONDAIRE AYANT UNE PARTIE DE LIBÉRATION DE GAZ ET BATTERIE SECONDAIRE LE COMPRENANT

(30) Priority: 28.12.2020 KR 20200184482; 02.11.2021 KR 20210148398
(43) Date of publication of application: 10.05.2023
(73) Proprietor: LG Energy Solution, Ltd., Seoul 07335 (KR)
(72) Inventor: LIM, Hun-Hee, Daejeon 34122 (KR); KIM, Sang-Hun, Daejeon 34122 (KR); KANG, Min-Hyeong, Daejeon 34122 (KR); YU, Hyung-Kyun, Daejeon 34122 (KR); HWANG, Soo-Ji, Daejeon 34122 (KR)
(74) Representative: Plasseraud IP
(86) International application number: PCT/KR2021/019781
(87) International publication number: WO 2022/145884

(56) References cited:
- KR-A- 20130 117 637
- KR-A- 20160 126 157
- KR-A- 20180 130 892
- KR-A- 20200 090 497
- KR-B1- 101 787 636
- KR-B1- 101 787 636
- US-A1- 2016 028 068
- US-A1- 2019 372 083

## Description

### TECHNICAL FIELD

The present application claims priority to Korean Patent Application No. 10-2020-0184482 filed on December 28, 2020 and Korean Patent Application No. 10-2021-0148398 filed on November 2, 2021 in the Republic of Korea.

The present disclosure relates to an electrode lead for a secondary battery having a gas release portion and a secondary battery including the same.

### BACKGROUND ART

Due to the rapid increase in the use of fossil fuels, the demand for the use of alternative energy or clean energy is increasing, and the most actively studied field as a part thereof is the field of power generation and power storage using electrochemistry.

Currently, a typical example of electrochemical devices using electrochemical energy includes a secondary battery, and the area of use of secondary batteries is gradually expanding.

Recently, as technical development and demand for mobile instruments, such as portable computers, cellular phones and cameras, have been increased, secondary batteries as energy sources have been increasingly in demand. Particularly, lithium secondary batteries which show high charge/discharge characteristics and life characteristics and are eco-friendly have been studied intensively, and have been commercialized and used widely.

However, as the application spectrum of lithium secondary batteries has been expanded as mentioned above, there is a need for an increase in energy density. Therefore, such lithium secondary batteries cause an increase in gases generated inside of the secondary batteries due to such increased energy density.

Moreover, when water infiltrates into secondary batteries, side reactions occur, and thus the problems of degradation of the performance of secondary batteries and gas generation are accelerated undesirably.

Under these circumstances, the above-mentioned safety problem has been solved by forming a gas release portion in a secondary battery so that the gases generated inside of the secondary battery may be released to the outside. However, when the secondary battery is vented, the life of the secondary battery is reduced significantly. Therefore, there is an imminent need for the solution of the above-mentioned problem. Examples of electrode lead assemblies are given in documents US 2016/028068 A1, US 2019/372083 A1 and KR 101 787 636 B1.

### DISCLOSURE

### Technical Problem

The present disclosure is designed to solve the problems of the related art and the technical problems required to be solved from the past.

Particularly, the present invention is directed to providing an electrode lead for a secondary battery which has an efficiently structured gas release path to improve the safety of a secondary battery, and a secondary battery including the same.

### Technical Solution

In one aspect of the present invention, there is provided an electrode lead according to claim 1. Preferred embodiments are defined in the dependent claims.

According to several embodiments:

The coating layer may have a thickness of 0.1-5 µm.

The gas release portion may have a structure formed by removing the coating layer in the thickness direction to 50-100% based on the total thickness of the coating layer.

The gas release portion may have a structure formed by coating with at least one non-adhesive material selected from the group consisting of a polyimide-based material, a fluorine-based material and polymethylpentene.

The fluorine-based material may include at least one selected from the group consisting of polytetrafluoroethylene and polyvinylidene fluoride.

The non-adhesive material may be coated to a thickness of 30 nm to 10 µm.

The gas release portion may have a planar shape selected from a circular shape, an oval shape and a polygonal shape.

The gas release portion may be formed with an area corresponding to 10-70% based on the total area of the electrode lead.

The metal substrate may include at least one selected from the group consisting of nickel (Ni), aluminum (Al), copper (Cu) and stainless steel.

The coating layer may include at least one selected from the group consisting of chrome (Cr), nickel (Ni), iron (Fe), molybdenum (Mo), silicon (Si), titanium (Ti), columbium (Cb), silicon oxide, tin oxide and titanium oxide.

In another aspect of the present invention, there is provided a secondary battery which includes an electrode assembly including a positive electrode, a negative electrode and a separator interposed between the positive electrode and the negative electrode, and received in a battery casing together with an electrolyte,
wherein the positive electrode includes a positive electrode tab, and the negative electrode includes a negative electrode tab,
the positive electrode tab is electrically connected with a positive electrode lead, the negative electrode tab is electrically connected with a negative electrode tab, and the positive electrode lead and the negative electrode lead are exposed to the outside through a sealing portion of the battery casing,
an insulation film is attached to a portion where the positive electrode lead and the negative electrode lead are in contact with the sealing portion of the battery casing, and
at least one electrode lead of the positive electrode lead (110) and the negative electrode lead (100) according to any one of claims 1 to 11 at the portion where the insulation film (205, 206) is attached.

In the secondary battery:
The coating layer may have a thickness of 0.1-5 µm.

The gas release portion may have a structure formed by removing the coating layer partially or totally in the thickness direction through a physical or chemical etching process.

The gas release portion may have a structure formed by removing the coating layer in the thickness direction to 50-100% based on the total thickness of the coating layer.

The gas release portion may have a structure formed by coating with at least one non-adhesive material selected from the group consisting of a polyimide-based material, a fluorine-based material and polymethylpentene.

The fluorine-based material may include at least one selected from the group consisting of polytetrafluoroethylene and polyvinylidene fluoride.

The non-adhesive material may be coated to a thickness of 30 nm to 10 µm.

The gas release portion may have a planar shape selected from a circular shape, an oval shape and a polygonal shape.

The gas release portion may be formed with an area corresponding to 20-90% based on the total area in which the electrode lead is in contact with the insulation film.

The adhesion strength between the gas release portion and the insulation film may 20-80% based on the adhesion strength between the electrode lead, except the gas release portion, and the insulation film.

### Advantageous Effects

The electrode lead for a secondary battery according to the present invention has a gas release portion to provide an increased utility value.

In addition, the gas release portion may be formed by a simplified process of providing a non-adhesive surface to an insulation film to be adhered with the electrode lead subsequently (not forming part of the present invention) and thus may be formed rapidly and efficiently.

### DESCRIPTION OF DRAWINGS

FIG. 1 is a schematic view illustrating the electrode lead for a secondary battery according to an embodiment of the present invention.
FIG. 2 is a schematic view illustrating the secondary battery including the electrode lead according to another embodiment of the present invention.
FIG. 3 illustrates the electrode lead according to still another embodiment of the present invention.
FIGS. 4-7 are schematic views illustrating the method for manufacturing the electrode lead according to still another embodiment of the present invention.
FIG. 8 illustrates the electrode lead according to Example 3.
FIG. 9 is a graph illustrating the adhesion strength between the positive electrode lead of Example 1 and the insulation film according to Test Example 1.
FIG. 10 is a graph illustrating the adhesion strength between the negative electrode lead of Example 2 and the insulation film according to Test Example 1.
FIG. 11 is a graph illustrating the adhesion strength between the positive electrode lead of Example 1 and the insulation film according to Test Example 2.
FIG. 12 is a graph illustrating the adhesion strength between the negative electrode lead of Example 2 and the insulation film according to Test Example 2.
FIG. 13 is a graph illustrating the gas release amount of the gas release portion of Example 3 with the lapse of time.

### BEST MODE

Hereinafter, preferred embodiments of the present invention will be described in detail with reference to the accompanying drawings.

It will be further understood that the terms "comprises" and/or "comprising", "includes" and/or "including", or "has" and/or "having" when used in this specification, specify the presence of stated features, numbers, steps, elements, or combinations thereof, but do not preclude the presence or addition of one or more other features, numbers, steps, elements, or combinations thereof.

In one aspect of the present invention, there is provided an electrode lead for a secondary according to claim 1.

Herein, the coating layer may include a coating layer for improving the adhesion to an insulation film, while preventing the electrode lead from corrosion caused by a strong acid, or the like.

The coating layer may have a thickness of 0.1-5 µm.

When the thickness of the coating layer satisfies the above-defined range, it is possible to prevent an excessive increase in thickness of the electrode lead, while preventing the electrode lead from corrosion caused by a strong acid generated inside of a secondary battery.

Meanwhile, according to the related art, there have been developed various methods for forming a gas release portion for releasing gases generated inside of a secondary battery to the outside. For example, there has been an attempt to ensure the safety of a secondary battery by releasing the gases inside of the secondary battery through the formation of a notch in a pouch, formation of a separate gas release member between lead portions, or the like.

However, the above-mentioned methods cannot have an advantage in processing efficiency and cost competitiveness, since a secondary battery may not be used any longer, when being vented, resulting in significant degradation of the life of the battery and a need for a separate member.

On the contrary, according to the present disclosure, a gas release portion may be formed on the electrode lead for a secondary battery by a simplified process. Thus, it is possible to improve the life of a secondary battery, while ensuring the safety of the secondary battery.

Particularly, the gas release portion formed on at least one surface of the electrode lead may be formed through a very simple and economical process.

For example, the gas release portion may be formed by removing the coating layer partially or totally in the thickness direction through a physical or chemical etching process, wherein the gas release portion may have a structure formed by removing the coating layer in the thickness direction to 50-100% based on the total thickness of the coating layer.

When the removal of the coating layer satisfies the above-defined range, it is possible to ensure an effect of vent and to prevent the electrode lead itself from being damaged.

Herein, the physical or chemical etching process is not particularly limited, as long as it can remove the coating layer. For example, the physical or chemical etching may be carried out by a wet etching process through ultraviolet ozone (UVO) treatment and exposure to an acidic solution, a sputtering etching process, a plasma etching process, or the like. **In** other words, the gas release portion may be formed by disposing a mask on the electrode lead, wherein the mask has an opening corresponding to the shape of a gas release portion to be formed on the electrode lead, and removing the coating layer of the electrode lead through various etching processes.

The method will be explained in more detail hereinafter.

In a variant, the gas release portion may be formed by coating a polymer having a melting point of 220°C or higher. In addition, the gas release portion may be formed by coating a polymer having a glass transition temperature of 100°C or higher. When the gas release portion uses a polymer having the above-defined range of glass transition temperature, it is possible to form a gas release portion more easily, when the electrode lead is attached to the insulation film as described hereinafter.

The melting point may be determined by using a differential scanning calorimeter (DSC). For example, after the temperature of a sample is increased from 30°C to 280°C at a rate of 10°C/min, the sample is allowed to stand at 280°C for 10 minutes, cooled to 30°C at a rate of 10°C/min, and is allowed to stand at 30°C for 10 minutes. Then, the temperature of the sample is increased from 30°C to 280°C at a rate of 10°C/min, is allowed to stand at 280°C for 10 minutes to measure the temperature of each of melting peaks, and the top of the DSC curve is taken as a melting point.

The glass transition temperature may be determined by using a differential scanning calorimeter (DSC). For example, after the temperature of a sample is increased from 30°C to 280°C at a rate of 10°C/min, the sample is allowed to stand at 280°C for 10 minutes, cooled to 30°C at a rate of 10°C/min, and is allowed to stand at 30°C for 10 minutes. Then, the glass transition temperature may be determined by measuring the intersection point of heat absorption amount when maintaing the temperature, and the tangent at the knee point of the enthalpy curve obtained by increasing the temperature of the sample from 30°C to 280°C at a rate of 10°C/min and allowing the sample to stand at 280°C for 10 minutes.

According to an embodiment of the present disclosure, the gas release portion may be formed by coating with at least one non-adhesive material selected from the group consisting of a polyimide-based material, polytetrafluoroethylene, a polyvinylidene fluoride-based material and polymethylpentene.

The non-adhesive material is one that is not adhered to the insulation film attached to the electrode lead subsequently.

The non-adhesive material may be coated through a conventional known coating process with no particular limitation. For example, the non-adhesive material may be coated through a spin coating process, a blade coating process, a spray coating process, or an ink jet printing process, wherein a mask having an opening corresponding to the shape of the gas release portion may be used in order to form a gas release portion having a specific shape, similarly to the above-mentioned method. **In** a variant, the non-adhesive material may be transferred through a roll pressing process.

The method will be explained in more detail hereinafter.

Herein, the non-adhesive material may be coated to a thickness of 30 nm to 10 µm.

When the thickness of the non-adhesive material satisfies the above-defined range, there is no difficulty in processing, and a problem, such as electrolyte leakage caused by insufficient sealing of the other portions, may be prevented with ease.

In other words, the gas release portion may be formed by a very simple process of forming a portion where the insulation film is not attached to the electrode lead, when the insulation film is attached to the electrode lead subsequently during the manufacture of a secondary battery.

Therefore, the gases inside of a secondary battery may be released to the outside through the portion not attached to the insulation film.

In this manner, the gas release portion may be formed through a very simple and economical process of removing the coating layer of the electrode lead showing high adhesiveness to the insulation film, or coating a material having no adhesiveness to the insulation film, according to the present disclosure. Therefore, it is possible to realize the desired effects of the present disclosure with high processing and cost efficiency.

Herein, the gas release portion may be formed with an area corresponding to 10-70%, particularly 20-50%, based on the total planar area of the electrode lead, considering the area where the insulation film is attached subsequently.

When the area of the gas release portion satisfies the above-defined range, it is possible to form a gas release portion at the insulation film-attached portion and to prevent a sealability-related problem, such as excessive peeling of the coating layer and electrolyte leakage.

Meanwhile, the gas release portion has any planar shape with no particular limitation, and may have various shapes, such as a circular, oval or polygonal shape. However, the gas release portion may be formed with a pattern capable of releasing gases efficiently, while preventing a problem, such as electrolyte leakage.

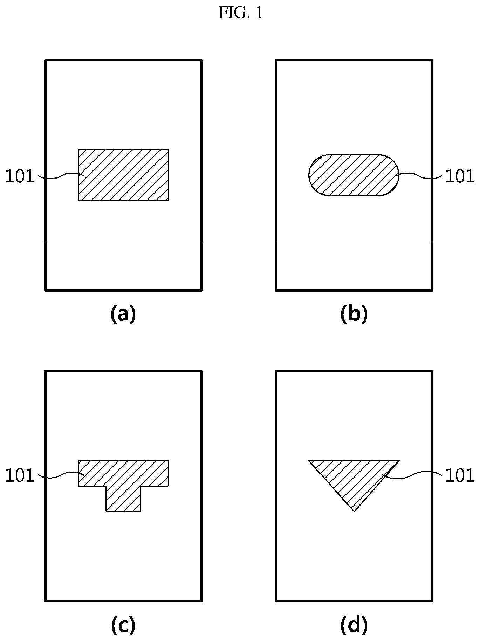

FIG. 1 is a schematic view illustrating the gas release portion 101 on the electrode lead according to an embodiment of the present disclosure.

Referring to FIG. 1, FIG. 1(a) shows a rectangular-shaped gas release portion 101, FIG. 1(b) shows an oval-shaped gas release portion 101, FIG. 1(c) shows a polygonal-shaped gas release portion 101, like an irregular shape, and FIG. 1(d) shows a triangular-shaped gas release portion 101.

However, the shapes shown in FIG. 1 are for illustrative purposes only, and the scope of the present disclosure is not limited thereto.

Meanwhile, the electrode lead according to the present disclosure includes a metal substrate and a coating layer coated on the metal substrate.

Herein, the metal substrate may include at least one selected from the group consisting of nickel (Ni), aluminum (Al), copper (Cu) and stainless steel. More particularly, preferred materials for the metal substrate may vary depending on whether the electrode lead is a positive electrode lead or negative electrode lead. For example, in the case of a positive electrode lead, aluminum, nickel or alloy containing at least one of them may be used. In the case of a negative electrode lead, copper, nickel or alloy containing at least one of them may be used.

Meanwhile, the electrode lead according to the present disclosure may have a coating layer formed on the metal substrate, and the coating layer prevents infiltration of water to a secondary battery and reaction thereof with an electrolyte to generate a strong acid causing corrosion of the secondary battery, and improves the adhesion with the insulation film. Herein, the coating layer may include a metal or metal oxide, particularly at least one selected from the group consisting of chrome (Cr), nickel (Ni), iron (Fe), molybdenum (Mo), silicon (Si), titanium (Ti), columbium (Cb), silicon oxide, tin oxide and titanium oxide.

Herein, the coating layer may have a thickness of 5 µm or less, particularly, 0.1-5 µm, more particularly 0.1-0.5 µm, and most particularly 0.2-0.3 µm.

When the coating layer thickness satisfies the above-defined range, it is possible to prevent corrosion of the electrode lead, caused by the strong acid generated in the secondary battery, and to inhibit an excessive increase in thickness of the electrode lead.

In addition, the coating layer may be formed by using a conventional method well known to those skilled in the art and is not particularly limited. For example, the coating layer may be formed through electroplating, or the like.

The gas release portion according to the present disclosure is formed by removing the coating layer partially or totally in the thickness direction, or by surface-treatment on the coating layer with a non-adhesive material.

In another aspect of the present invention, there is provided a secondary battery according to claim 11.

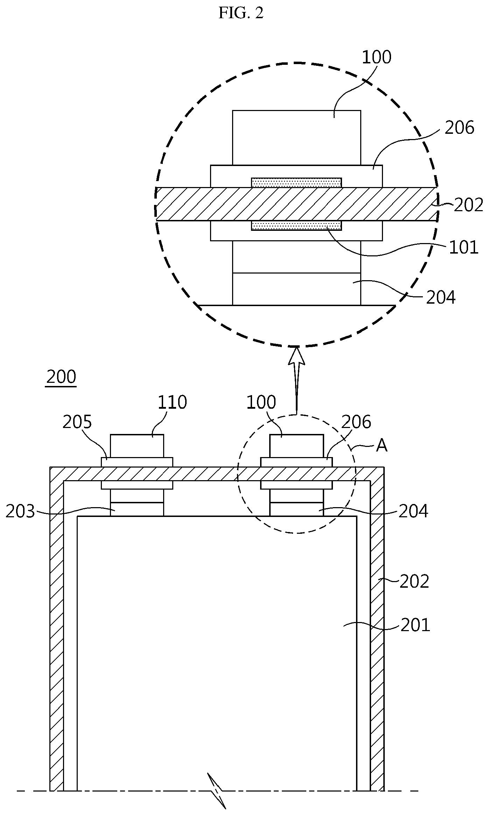

The secondary battery will be explained in more detail with reference to FIG. 2. FIG. 2 is a schematic view illustrating the secondary battery 200 according to an embodiment of the present disclosure.

Referring to FIG. 2, an electrode assembly 201 including a positive electrode, a negative electrode and a separator interposed between the positive electrode and the negative electrode is received in a battery casing 202 together with an electrolyte, wherein the positive electrode includes a positive electrode tab 203, and the negative electrode includes a negative electrode tab 204, the positive electrode tab 203 is electrically connected with a positive electrode lead 110, the negative electrode tab 204 is electrically connected with a negative electrode lead 100, and the positive electrode lead 110 and the negative electrode lead 100 are exposed to the outside through a sealing portion of the battery casing 202, and an insulation film 205, 206 is attached to a portion where the positive electrode lead 110 and the negative electrode lead 100 are in contact with the sealing portion of the battery casing 202.

Herein, when enlarging the negative electrode lead 100 to review the structure thereof (portion A), it can be seen that a gas release portion 101 is formed partially in the portion where the insulation film 206 is attached to the negative electrode lead 100.

Herein, the gas release portion 101 is not adhered with the insulation film 206 to provide a gas release path.

Although it is not shown in the drawing, a gas release portion may be formed in the positive electrode lead 110, or formed in both of the positive electrode lead 110 and the negative electrode lead 100.

Meanwhile, the gas release portion 101 may be formed with an area corresponding to 20-90%, particularly 30-80%, based on the area where the electrode lead is in contact with the insulation film.

When the area of the gas release portion 101 satisfies the above-defined range, it is possible to ensure a vent effect, while ensuring such an area that the sealability between the electrode lead and the insulation film may be retained.

In addition, the structure, shape, material, or the like, of the gas release portion 101 is the same as described above. Further, the other constitutional elements of the electrode lead are the same as described above.

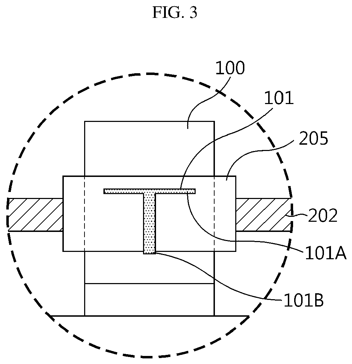

FIG. 3 illustrates the electrode lead 100 according to still another embodiment of the present disclosure.

Referring to FIG. 3, the electrode lead 100 is exposed to the outside through the sealing portion of a battery casing 202, and an insulation film 205 is attached to the portion where the electrode lead 100 is in contact with the sealing portion of the battery casing 202. Herein, it can be seen that a gas release portion 101 is formed in a part of the electrode lead 100.

Referring to FIG. 3, the gas release portion 101 includes a first gas release portion 101A and a second gas release portion 101B connected with each other, wherein the first gas release portion 101A may be extended along the width direction of the electrode lead, and the second gas release portion 101B may be extended along the direction of the protrusion of the electrode lead.

Referring to FIG. 3, the first gas release portion 101A may have a length smaller than the width of the electrode lead.

In addition, referring to FIG. 3, on the basis of the direction of the protrusion of the electrode lead, one end of the second gas release portion 101B outwards the battery may be positioned more inwardly in the battery as compared to the end of the portion where the electrode lead faces the insulation film outwards the battery. In addition, the other end of the second gas release portion 101B inwards the battery may be positioned more inwardly in the battery as compared to the end of the portion where the electrode lead faces the insulation film inwards the battery. Meanwhile, the insulation film 205, 206 may include any one material selected from electrically insulating thermoplastic, thermosetting and photocurable resins. For example, the material may include styrene butadiene resin, styrene resin, epoxy resin, urethane resin, acrylic resin, phenolic resin, amide-based resin, acrylate-based resin, and modified resins thereof. However, the material is not particularly limited, as long as it can perform the above-mentioned functions.

Reference will be made to the known contents about the other specification of the insulation film.

The adhesion strength between the gas release portion 101 of the electrode lead 100 formed according to the present disclosure and the insulation film 206 may be 20-30%, particularly 30-70%, of the adhesion strength between the electrode lead 100, except that gas release portion 101, and the insulation film 206.

Herein, the adhesion strength may be obtained by carrying out melt fusion of an electrode lead in which the gas release portion 101 is formed with an insulation film 206 made of polypropylene, storing the resultant structure in a chamber including 30 g of an electrolyte and 1.3 g of dry ice at 60°C and 90% RH for 2 weeks, partially peeling the electrode lead from the insulation film, and measuring the strength loaded depending on strain by using UTM, while drawing the electrode lead and the insulation film at 180°.

Meanwhile, the battery casing is not particularly limited, but may be a pouch-type battery casing which allows utilization of the above-described constitution suitably.

Since the other constitutional elements, such as the positive electrode, negative electrode, separator, positive electrode tab, negative electrode tab, battery casing and electrolyte, are known to those skilled in the art, detailed description thereof will be omitted herein.

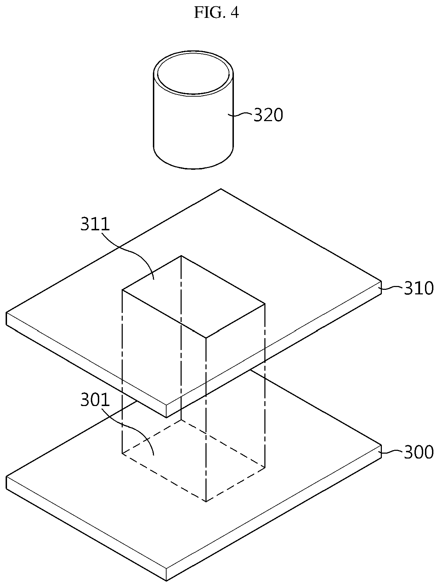

Meanwhile, as described above, the gas release portion 101 has a structure formed by removing the coating layer or by surface-treatment with a non-adhesive material. Hereinafter, such structures will be explained in more detail with reference to FIGS. 4-7.

According to an embodiment of the present disclosure, the gas release portion may be formed by removing the coating layer.

Particularly, the gas release portion may be formed by the method including the steps of:
(a) preparing a preliminary electrode lead including a metal substrate, and a coating layer formed on the surface of the metal substrate;
(b) preparing a mask including an opening corresponding to the shape of a gas release portion to be formed in the electrode lead; and
(c) disposing the mask on at least one surface of the top surface and the bottom surface of the preliminary electrode lead, and removing the coating layer partially with the shape corresponding to the opening of the mask.

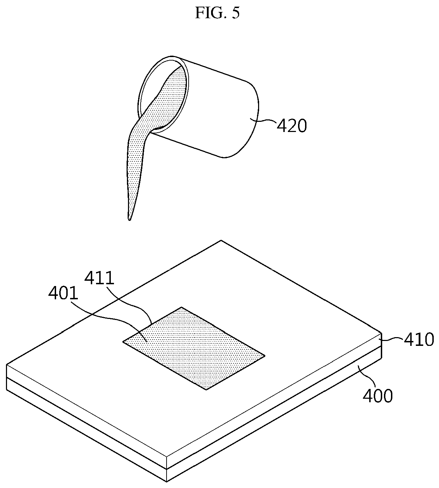

Particular embodiments of the method for partially removing the coating layer are shown in FIGS. 4 and 5.

First, referring to FIG. 4, a method for forming a gas release portion through a physical etching process is shown.

Particularly, a mask 310 including an opening 311 corresponding to the shape of a gas release portion 301 to be formed is disposed on a preliminary electrode lead 300, and impact is applied thereto through the opening 311 of the mask 310 by using a gas ionized by a sputter 320 to remove the coating layer with a shape corresponding to the opening 311 from the preliminary electrode lead 300, thereby forming the gas release portion 301.

In addition, referring to FIG. 5, a method for forming a gas release portion through a chemical etching process is shown.

Particularly, a mask 410 including an opening 411 is disposed on a preliminary electrode lead 400, an acidic solution 420 is introduced through the opening 411 to carry out chemical etching treatment so that the coating layer of the preliminary electrode lead 400 may be removed, thereby forming a gas release portion 401.

Herein, the acidic solution 420 is not particularly limited, as long as it is acidic and is capable of removing the coating layer. For example, the acidic solution may be a mixed solution of perchloric acid with ammonium nitrate.

According to another embodiment, the gas release portion on the electrode lead may be formed by surface-treating the electrode lead with a non-adhesive material that is not adhesive to the insulation film.

Particularly, the gas release portion may be formed by the method including the steps of:
(a) preparing a preliminary electrode lead including a metal substrate, and a coating layer formed on the surface of the metal substrate; and
(b) surface-treating a part of at least one surface of the top surface and the bottom surface of the preliminary electrode lead with a non-adhesive material to form a gas release portion.

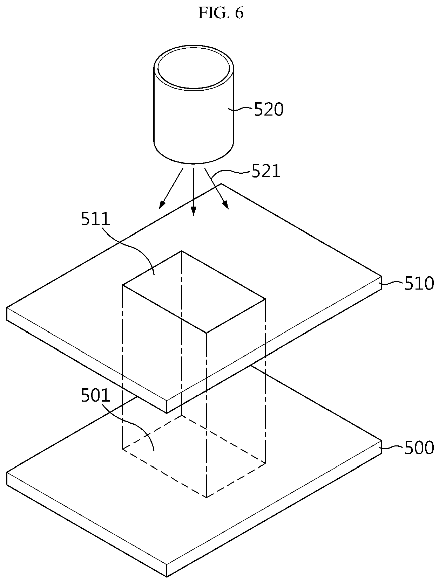

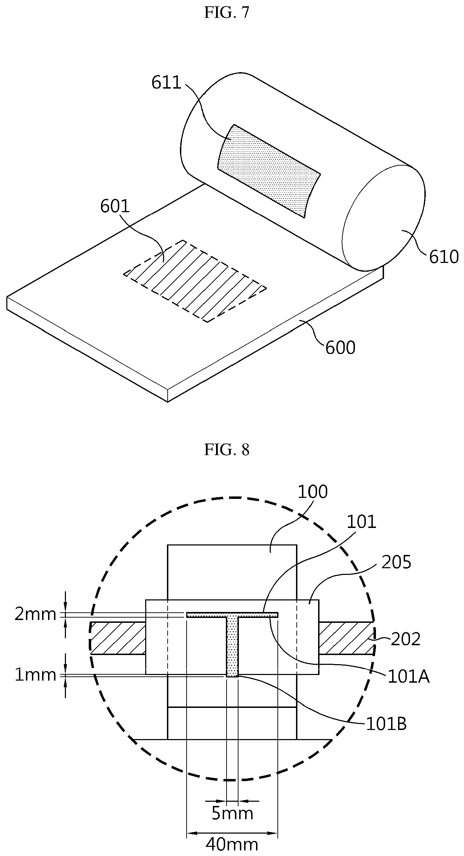

Particular embodiments of the method are shown in FIGS. 6 and 7.

Referring to FIG. 6, a coating process, such as spray coating, inkjet coating or blade coating, is shown.

Particularly, a mask 510 including an opening 511 corresponding to the shape of a gas release portion 501 to be formed is disposed on at least one surface of the top surface and the bottom surface of a preliminary electrode lead 500, and a non-adhesive material 521 is applied through the opening 511 of the mask 510 by using various methods, such as a spray coater 520, to form the gas release portion 501.

In a variant, FIG. 7 illustrates a method for coating a non-adhesive material through a roll pressing process.

Particularly, a gas release portion 601 is formed by transferring and coating a non-adhesive material 611 onto the surface of a preliminary electrode lead 600 through a pressing process using a roll 610 having the non-adhesive material 611 formed thereon with a shape corresponding to the shape of the gas release portion 601.

Herein, particular examples of the non-adhesive material 521, 611 are the same as described above.

### MODE FOR DISCLOSURE

Hereinafter, the present disclosure will be explained with reference to preferred examples, comparative examples and test examples. However, it should be understood that the specific examples are given by way of illustration only, since various changes and modifications within the scope of the disclosure will become apparent to those skilled in the art from this detailed description.

### <Example 1>

A preliminary electrode lead including aluminum (Al) foil having a thickness of 200 µm and coated with chrome (Cr) to a thickness of 0.2 µm was irradiated with laser (output: 70 W, wavelength: 300 nm) to carry out etching of Cr in the rectangular shape as shown in FIG. 1(a) (no Cr layer remained at the corresponding portion).

Then, a polypropylene film (thickness: 100 µm) as an insulation film was stacked on the corresponding portion and fused thereto in such a manner that it might cover the corresponding portion to prepare an electrode lead/insulation film laminate.

### <Example 2>

An electrode lead/insulation film laminate was obtained in the same manner as Example 1, except that a preliminary electrode lead including copper (Cu) foil having a thickness of 200 µm and coated with nickel (Ni) to a thickness of 1 µm and chrome (Cr) coated to the surface of nickel to a thickness of 0.2 µm was used.

### <Example 3>

To the surface of a preliminary electrode lead 100 including aluminum (Al) foil having a thickness of 200 µm and coated with chrome (Cr) to a thickness of 0.2 µm, a copolymer of vinylidene monomer, hexafluoropropylene monomer and tetrafluoroethylene monomer was applied by using a dispenser in a T-like shape as shown in FIG. 8. After completing the application, UV rays were irradiated at 3 W to carry out curing for 30 seconds, and hot air drying was carried out at 140°C for 5 minutes to form a gas release portion 101.

Then, a polypropylene film (thickness: 100 µm) as an insulation film 205 was stacked and fused in such a manner that it might cover the corresponding portion to prepare an electrode lead/insulation film laminate, as shown in FIG. 8.

### <Test Example 1>

Each of the laminate according to Example 1 and the laminate according to Example 2 was stored in a chamber including 30 g of a solution containing fluoroethylene carbonate (FEC) and ethyl methyl carbonate (EMC) at a volume ratio of 3:7 and 1 M LiFSI dissolved therein, and 1.3 g of dry ice, at 60°C and 90% RH for 2 weeks.

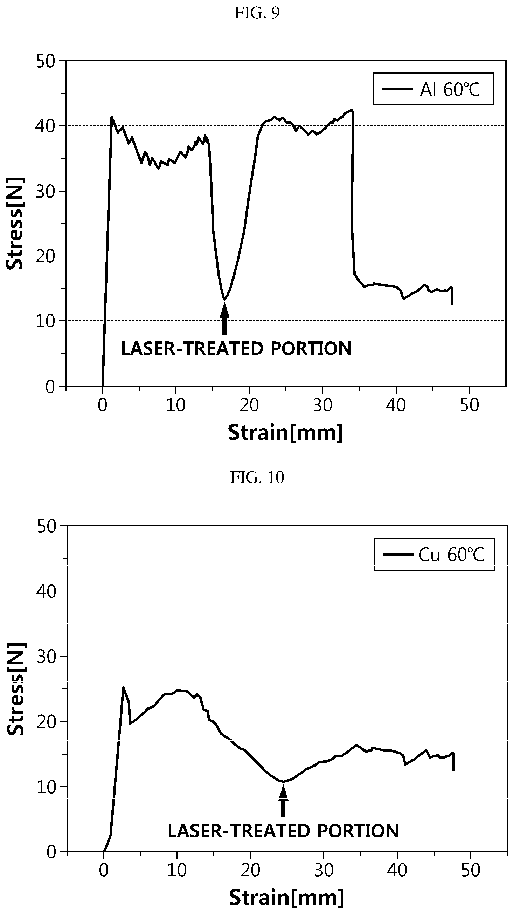

After 2 weeks, each laminate was mounted to a UTM system (LLOYD Instrument LF Plus) and force was applied thereto at a rate of 300 mm/min at 180° to determine the separation strength (i.e. adhesion strength) required for separating the insulation film and the electrode lead from each other. The results are shown in FIGS. 9 and 10.

Referring to FIGS. 9 and 10, it can be seen that the adhesion strength is significantly reduced at the portion from which Cr is removed through the laser treatment.

### <Test Example 2>

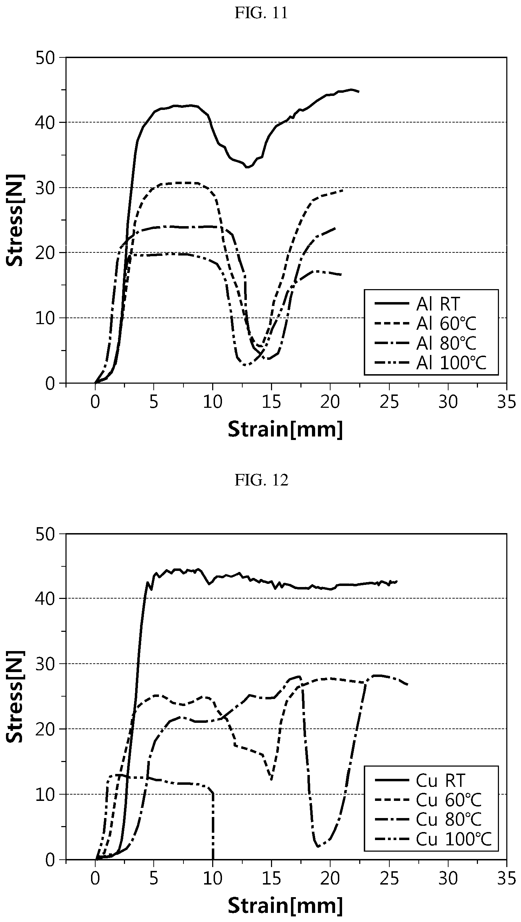

Each of the laminate according to Example 1 and the laminate according to Example 2 was dipped in a solution containing fluoroethylene carbonate (FEC) and ethyl methyl carbonate (EMC) at a volume ratio of 3:7 and 1 M LiFSI dissolved therein in an oven at 25°C (RT), 60°C, 80°C or 100°C for 1 day. Then, the laminate was taken out and mounted to a UTM system (LLOYD Instrument LF Plus), and force was applied thereto at a rate of 300 mm/min at 180° to determine the separation strength (i.e. adhesion strength) required for separating the insulation film and the electrode lead from each other. The results are shown in FIGS. 11 and 12.

Referring to FIGS. 11 and 12, it can be seen that the gas release portion is more effective, as the temperature is increased.

### <Test Example 3>

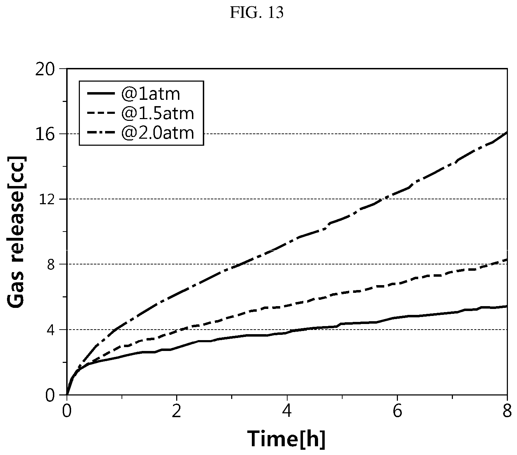

FIG. 13 is a graph illustrating the gas release amount of the electrode lead/insulation film laminate according to Example 3 with the lapse of time.

The gas release amount with the lapse of time was determined by preparing three secondary batteries each including the electrode lead/insulation film laminate according to Example 3 and a gas line capable of gas injection from the outside, injecting gas from the outside through the gas line at a rate of 50 sc/cm to a pressure of 1, 1.5 or 2 atm, observing how the pressure is changed with the lapse of time, and calculating the gas release amount according to the correlation equation between pressure and gas injection amount.

It can be seen from FIG. 13 that the gas release portion according to the present disclosure may function under various conditions.

## Claims

1. An electrode lead (100, 110) for a secondary battery with an insulation film attached thereto, comprising a metal substrate and a coating layer comprising a metal or metal oxide formed on the surface of the metal substrate, wherein a surface of at least one of the top surface and the bottom surface of the electrode lead provides a gas release portion (101), said gas release portion being:
a - formed by a surface-treatment with a non-adhesive material (521, 611) on said surface wherein the non-adhesive material (521, 611) is a coating formed on the surface of the coating layer and is one that is not adhered to the insulation film attached to the electrode lead, or
b - formed by removing the coating layer partially or totally in the thickness direction through a physical or chemical etching process on said surface of the metal substrate.

2. The electrode lead for a secondary battery according to claim 1, wherein the coating layer has a thickness of 0.1-5 µm.

3. The electrode lead for a secondary battery according to claim 1, wherein the gas release portion (101) has a structure formed by removing the coating layer in the thickness direction to 50-100% based on the total thickness of the coating layer.

4. The electrode lead for a secondary battery according to claim 1, wherein the gas release portion (101) has a structure formed by coating with at least one non-adhesive material selected (521, 611) from the group consisting of a polyimide-based material, a fluorine-based material and polymethylpentene.

5. The electrode lead for a secondary battery according to claim 4, wherein the fluorine-based material comprises at least one selected from the group consisting of polytetrafluoroethylene and polyvinylidene fluoride.

6. The electrode lead for a secondary battery according to claim 1, wherein the non-adhesive material (521, 611) is coated to a thickness of 30 nm to 10 µm.

7. The electrode lead for a secondary battery according to claim 1, wherein the gas release portion (101) has a planar shape selected from a circular shape, an oval shape and a polygonal shape.

8. The electrode lead for a secondary battery according to claim 1, wherein the gas release portion (101) is formed with an area corresponding to 10-70% based on the total area of the electrode lead.

9. The electrode lead for a secondary battery according to claim 1, wherein the metal substrate comprises at least one selected from the group consisting of nickel (Ni), aluminum (Al), copper (Cu) and stainless steel.

10. The electrode lead for a secondary battery according to claim 1, wherein the coating layer comprises at least one selected from the group consisting of chrome (Cr), nickel (Ni), iron (Fe), molybdenum (Mo), silicon (Si), titanium (Ti), columbium (Cb), silicon oxide, tin oxide and titanium oxide.

11. A secondary battery (200), which comprises an electrode assembly comprising a positive electrode, a negative electrode and a separator interposed between the positive electrode and the negative electrode, and received in a battery casing (202) together with an electrolyte,
wherein the positive electrode comprises a positive electrode tab (203), and the negative electrode comprises a negative electrode tab (204),
the positive electrode tab (203) is electrically connected with a positive electrode lead (110), the negative electrode tab (204) is electrically connected with a negative electrode lead (100), and the positive electrode lead and the negative electrode lead are exposed to the outside through a sealing portion of the battery casing (202),
an insulation film (205, 206) is attached to a portion where the positive electrode lead (110) and the negative electrode lead (100) are in contact with the sealing portion of the battery casing (202), and
at least one electrode lead of the positive electrode lead (110) and the negative electrode lead (100) according to claims 1 to 10 at the portion where the insulation film (205, 206) is attached.

12. The secondary battery according to claim 11, wherein the non-adhesive material is coated to a thickness of 30 nm to 10 µm.

13. The secondary battery according to claim 11, wherein the gas release portion (101) is formed with an area corresponding to 20-90% based on the total area in which the electrode lead is in contact with the insulation film (205, 206).

14. The secondary battery according to claim 11, wherein the adhesion strength between the gas release portion (101) and the insulation film is 20-80% based on the adhesion strength between the electrode lead, except the gas release portion (101), and the insulation film (205, 206).

## Patentansprüche

1. Elektrodenleitung (100, 110) für eine Sekundärbatterie mit einem daran angebrachten Isolierfilm, umfassend ein Metallsubstrat und eine Beschichtungsschicht, die ein Metall oder Metalloxid umfasst, das auf der Oberfläche des Metallsubstrats ausgebildet ist, wobei eine Oberfläche von mindestens einer der oberen Oberfläche und der unteren Oberfläche der Elektrodenleitung einen Gasfreisetzungsabschnitt (101) bereitstellt, wobei der genannte Gasfreisetzungsabschnitt ist:
a - gebildet durch eine Oberflächenbehandlung mit einem nicht haftenden Material (521, 611) auf der genannten Oberfläche, wobei das nicht haftende Material (521, 611) eine auf der Oberfläche der Beschichtungsschicht gebildete Beschichtung ist und eines ist, das nicht an dem an der Elektrodenleitung angebrachten Isolierfilm haftet,
oder
b - gebildet durch teilweises oder vollständiges Entfernen der Beschichtungsschicht in der Dickenrichtung durch einen physikalischen oder chemischen Ätzprozess auf der genannten Oberfläche des Metallsubstrats.

2. Elektrodenleitung für eine Sekundärbatterie nach Anspruch 1, wobei die Beschichtungsschicht eine Dicke von 0,1-5 µm aufweist.

3. Elektrodenleitung für eine Sekundärbatterie nach Anspruch 1, wobei der Gasfreisetzungsabschnitt (101) eine Struktur aufweist, die durch Entfernen der Beschichtungsschicht in der Dickenrichtung zu 50-100 % bezogen auf die Gesamtdicke der Beschichtungsschicht gebildet wird.

4. Elektrodenleitung für eine Sekundärbatterie nach Anspruch 1, wobei der Gasfreisetzungsabschnitt (101) eine Struktur aufweist, die durch Beschichten mit mindestens einem nicht haftenden Material (521, 611) gebildet wird, das aus der Gruppe ausgewählt ist, die aus einem Material auf Polyimidbasis, einem Material auf Fluorbasis und Polymethylpenten besteht.

5. Elektrodenleitung für eine Sekundärbatterie nach Anspruch 4, wobei das Material auf Fluorbasis mindestens eines umfasst, das aus der Gruppe ausgewählt ist, die aus Polytetrafluorethylen und Polyvinylidenfluorid besteht.

6. Elektrodenleitung für eine Sekundärbatterie nach Anspruch 1, wobei das nicht haftende Material (521, 611) in einer Dicke von 30 nm bis 10 µm beschichtet ist.

7. Elektrodenleitung für eine Sekundärbatterie nach Anspruch 1, wobei der Gasfreisetzungsabschnitt (101) eine planare Form aufweist, die aus einer kreisförmigen Form, einer ovalen Form und einer polygonalen Form ausgewählt ist.

8. Elektrodenleitung für eine Sekundärbatterie nach Anspruch 1, wobei der Gasfreisetzungsabschnitt (101) mit einer Fläche gebildet ist, die 10-70 % bezogen auf die Gesamtfläche der Elektrodenleitung entspricht.

9. Elektrodenleitung für eine Sekundärbatterie nach Anspruch 1, wobei das Metallsubstrat mindestens eines umfasst, das aus der Gruppe ausgewählt ist, die aus Nickel (Ni), Aluminium (Al), Kupfer (Cu) und rostfreiem Stahl besteht.

10. Elektrodenleitung für eine Sekundärbatterie nach Anspruch 1, wobei die Beschichtungsschicht mindestens eines umfasst, das aus der Gruppe ausgewählt ist, die aus Chrom (Cr), Nickel (Ni), Eisen (Fe), Molybdän (Mo), Silizium (Si), Titan (Ti), Columbium (Cb), Siliziumoxid, Zinnoxid und Titanoxid besteht.

11. Sekundärbatterie (200), die eine Elektrodenanordnung umfasst, die eine positive Elektrode, eine negative Elektrode und einen zwischen der positiven Elektrode und der negativen Elektrode angeordneten Separator umfasst, und die zusammen mit einem Elektrolyten in einem Batteriegehäuse (202) aufgenommen ist,
wobei die positive Elektrode eine positive Elektrodenlasche (203) umfasst, und die negative Elektrode eine negative Elektrodenlasche (204) umfasst,
die positive Elektrodenlasche (203) elektrisch mit einer positiven Elektrodenleitung (110) verbunden ist, die negative Elektrodenlasche (204) elektrisch mit einer negativen Elektrodenleitung (100) verbunden ist, und die positive Elektrodenleitung und die negative Elektrodenleitung durch einen Dichtungsabschnitt des Batteriegehäuses (202) nach außen freigelegt sind,
ein Isolierfilm (205, 206) an einem Abschnitt angebracht ist, wo die positive Elektrodenleitung (110) und die negative Elektrodenleitung (100) mit dem Dichtungsabschnitt des Batteriegehäuses (202) in Kontakt stehen, und
mindestens eine Elektrodenleitung der positiven Elektrodenleitung (110) und der negativen Elektrodenleitung (100) nach einem der Ansprüche 1 bis 10 an dem Abschnitt ist, an dem der Isolierfilm (205, 206) angebracht ist.

12. Sekundärbatterie nach Anspruch 11, wobei das nicht haftende Material in einer Dicke von 30 nm bis 10 µm beschichtet ist.

13. Sekundärbatterie nach Anspruch 11, wobei der Gasfreisetzungsabschnitt (101) mit einer Fläche gebildet ist, die 20-90 % bezogen auf die Gesamtfläche entspricht, in der die Elektrodenleitung mit dem Isolierfilm (205, 206) in Kontakt steht.

14. Sekundärbatterie nach Anspruch 11, wobei die Adhäsionsfestigkeit zwischen dem Gasfreisetzungsabschnitt (101) und dem Isolierfilm 20-80 % bezogen auf die Adhäsionsfestigkeit zwischen der Elektrodenleitung, mit Ausnahme des Gasfreisetzungsabschnitts (101), und dem Isolierfilm (205, 206) beträgt.

## Revendications

1. Fil d'électrode (100, 110) pour une batterie secondaire avec un film isolant fixé à celui-ci, comprenant un substrat métallique et une couche de revêtement comprenant un métal ou un oxyde métallique formé sur la surface du substrat métallique, dans lequel une surface d'au moins l'une de la surface supérieure et de la surface inférieure du fil d'électrode fournit une partie de décharge de gaz (101), ladite partie de décharge de gaz étant :
a - formée par un traitement de surface avec un matériau non adhésif (521, 611) sur ladite surface, dans lequel le matériau non adhésif (521, 611) est un revêtement formé sur la surface de la couche de revêtement et est un matériau qui n'adhère pas au film isolant fixé au fil d'électrode,
ou
b - formée en enlevant la couche de revêtement partiellement ou totalement dans le sens de l'épaisseur par un procédé de gravure physique ou chimique sur ladite surface du substrat métallique.

2. Fil d'électrode pour une batterie secondaire selon la revendication 1, dans lequel la couche de revêtement a une épaisseur de 0,1 à 5 µm.

3. Fil d'électrode pour une batterie secondaire selon la revendication 1, dans lequel la partie de décharge de gaz (101) a une structure formée en enlevant la couche de revêtement dans le sens de l'épaisseur à 50-100 % sur la base de l'épaisseur totale de la couche de revêtement.

4. Fil d'électrode pour une batterie secondaire selon la revendication 1, dans lequel la partie de décharge de gaz (101) a une structure formée par revêtement avec au moins un matériau non adhésif sélectionné (521, 611) dans le groupe constitué d'un matériau à base de polyimide, d'un matériau à base de fluor et de polyméthylpentène.

5. Fil d'électrode pour une batterie secondaire selon la revendication 4, dans lequel le matériau à base de fluor comprend au moins un élément sélectionné dans le groupe constitué du polytétrafluoroéthylène et du polyfluorure de vinylidène.

6. Fil d'électrode pour une batterie secondaire selon la revendication 1, dans lequel le matériau non adhésif (521, 611) est appliqué en une épaisseur de 30 nm à 10 µm.

7. Fil d'électrode pour une batterie secondaire selon la revendication 1, dans lequel la partie de décharge de gaz (101) a une forme plane sélectionnée parmi une forme circulaire, une forme ovale et une forme polygonale.

8. Fil d'électrode pour une batterie secondaire selon la revendication 1, dans lequel la partie de décharge de gaz (101) est formée avec une aire correspondant à 10-70 % sur la base de la surface totale du fil d'électrode.

9. Fil d'électrode pour une batterie secondaire selon la revendication 1, dans lequel le substrat métallique comprend au moins un élément sélectionné dans le groupe constitué du nickel (Ni), de l'aluminium (Al), du cuivre (Cu) et de l'acier inoxydable.

10. Fil d'électrode pour une batterie secondaire selon la revendication 1, dans lequel la couche de revêtement comprend au moins un élément sélectionné dans le groupe constitué par le chrome (Cr), le nickel (Ni), le fer (Fe), le molybdène (Mo), le silicium (Si), le titane (Ti), le colombium (Cb), l'oxyde de silicium, l'oxyde d'étain et l'oxyde de titane.

11. Batterie secondaire (200), qui comprend un ensemble d'électrode comprenant une électrode positive, une électrode négative et un séparateur interposé entre l'électrode positive et l'électrode négative, et reçu dans un boîtier de batterie (202) avec un électrolyte,
dans laquelle l'électrode positive comprend une languette d'électrode positive (203), et l'électrode négative comprend une languette d'électrode négative (204),
la languette d'électrode positive (203) est connectée électriquement à un fil d'électrode positive (110), la languette d'électrode négative (204) est connectée électriquement à un fil d'électrode négative (100), et le fil d'électrode positive et le fil d'électrode négative sont exposés à l'extérieur à travers une partie de scellement du boîtier de batterie (202),
un film isolant (205, 206) est fixé à une partie où le fil d'électrode positive (110) et le fil d'électrode négative (100) sont en contact avec la partie de scellement du boîtier de batterie (202), et
au moins un fil d'électrode du fil d'électrode positive (110) et du fil d'électrode négative (100) est selon l'une quelconque des revendications 1 à 10 au niveau de la partie où le film d'isolation (205, 206) est fixé.

12. Batterie secondaire selon la revendication 11, dans laquelle le matériau non adhésif est appliqué en une épaisseur de 30 nm à 10 µm.

13. Batterie secondaire selon la revendication 11, dans laquelle la partie de décharge de gaz (101) est formée avec une aire correspondant à 20-90 % sur la base de la surface totale dans laquelle le fil d'électrode est en contact avec le film isolant (205, 206).

14. Batterie secondaire selon la revendication 11, dans laquelle la force d'adhérence entre la partie de décharge de gaz (101) et le film d'isolation est de 20-80 % sur la base de la force d'adhérence entre le fil d'électrode, à l'exception de la partie de décharge de gaz (101), et le film d'isolation (205, 206).
